Europäisches Patentamt

European Patent Office

Office européen des brevets

(11) Numéro de publication: **0 262 007**
**B1**

(12) **FASCICULE DE BREVET EUROPEEN**

(45) Date de publication du fascicule du brevet:
**14.06.89**

(21) Numéro de dépôt: **87401886.4**

(22) Date de dépôt: **14.08.87**

(51) Int. Cl.⁴: **B62D 6/02**

(54) Dispositif asservi de contrôle de débit pour installation hydraulique notamment pour servo-direction de véhicule.

(30) Priorité: **18.09.86 FR 8613077**

(43) Date de publication de la demande:
**30.03.88 Bulletin 88/13**

(45) Mention de la délivrance du brevet:
**14.06.89 Bulletin 89/24**

(84) Etats contractants désignés:
**DE ES GB IT**

(56) Documents cités:
**EP-A- 0 071 909**
**EP-A- 0 072 732**
**EP-A- 0 089 512**
**US-A- 4 485 883**

(73) Titulaire: **BENDIX France Société Anonyme dite:,
126, rue de Stalingrad, F-93700 Drancy(FR)**

(72) Inventeur: **Kervagoret, Gilbert, 5, Impasse Nobleterre,
F-95100 Argenteuil(FR)**

(74) Mandataire: **Lejet, Christian et al, Division Technique
Service Brevets BENDIX Europe 126, rue de Stalingrad,
F-93700 Drancy(FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne les dispositifs asservis de contrôle de débit pour installation hydraulique, notamment pour servo-direction de véhicule, comprenant une source de pression ayant une sortie reliée à une entrée d'un distributeur hydraulique du type à centre ouvert pour la commande d'un moteur hydraulique, le distributeur ayant une sortie de retour vers une bâche, et, plus particulièrement, un dispositif du type comprenant, dans un corps, un ensemble modulateur à tiroir interposé dans un circuit de dérivation entre la sortie de la source de pression et la bâche, et piloté hydrauliquement, par effet de différentielle de pression, par un clapet pilote commandé électromagnétiquement créant la différentielle de pression.

Un dispositif de contrôle de débit de ce type est décrit dans le document EP-A-0 072 732 au nom de la demanderesse. Dans le dispositif de ce document, le clapet pilote est disposé entre la chambre pilote du modulateur à tiroir et la sortie vers la bâche, en modulant donc un débit de fuite fonction de la pression pilote variant elle-même en fonction des fluctuations en sortie de la source de pression, dans un agencement délicat à régler et nécessitant une électronique de commande du clapet pilote relativement sophistiquée.

La présente invention a pour objet de proposer un dispositif du type considéré dans un agencement nouveau, au fonctionnement plus stable et fiable et permettant de simplifier l'éléctronique de commande.

Pour ce faire, selon une caractéristique de l'invention, le clapet pilote est disposé entre la bâche et un point intermédiaire du circuit de dérivation auquel est reliée la sortie de retour du distributeur, le point intermédiaire étant lui-même situé directement en aval de l'ensemble modulateur.

Avec un tel agencement, la différentielle de pression, créée par le clapet pilote et commandant l'ensemble modulateur, ne dépend que de l'ouverture du clapet pilote car ce dernier est traversé par la totalité du débit alimentant l'installation hydraulique, soit donc un débit sensiblement constant.

La présente invention a pour autre objet de proposer un dispositif du type défini ci-dessus mémorisant une condition déterminée de fonctionnement en cas de défaillance de l'électronique de commande du clapet pilote, et procurant ainsi une sécurité accrue.

Pour ce faire, selon une autre caractéristique de l'invention, l'ensemble modulateur comprend un tiroir pilote actionnable par la différentielle de pression de part et d'autre du clapet pilote et verrouillable en une position quelconque par un clapet d'isolement couplé au clapet pilote en cas de défaillance du dispositif de commande électromagnétique de ce dernier.

D'autres caractéristiques et avantages de la présente invention ressortiront de la description suivante d'un mode de réalisation, donné à titre illustratif mais nullement limitatif, faite en relation avec les dessins annexés, sur lesquels :

- la figure 1 est une vue schématique d'une installation hydraulique de servo-direction de véhicule incorporant un dispositif selon l'invention ; et
- la figure 2 est une vue en coupe schématique du dispositif selon l'invention.

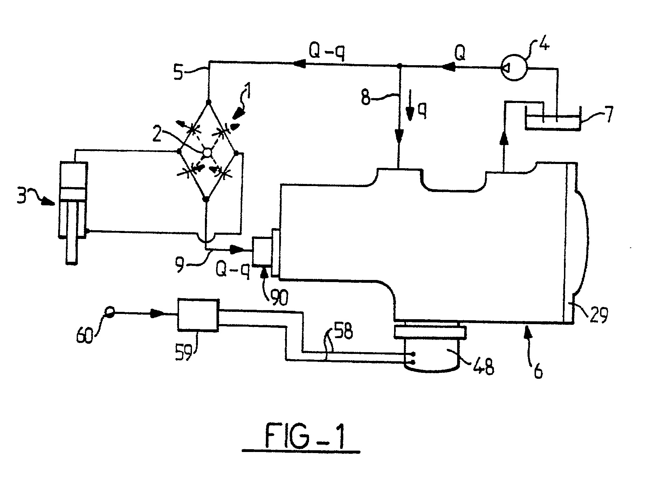

On reconnaît sur la figure 1 une installation hydraulique de servo-direction de véhicule comprenant un distributeur du type à centre ouvert 1, par exemple du type à valve rotative, commandé par un organe d'actionnement 2, typiquement relié au volant de direction du véhicule (non représenté), pour alimenter sélectivement les chambres antagonistes d'un moteur hydraulique 3 en une pression de fluide modulée provenant d'une source de fluide sous pression 4 reliée à une entrée haute pression 5 du distributeur 1.

Conformément à l'invention, un dispositif asservi de contrôle de débit de dérivation, désigné généralement par la référence 6, est interposé entre un réservoir basse pression ou bâche 7, dans laquelle puise typiquement la source de pression 4, et, d'une part, une conduite de dérivation 8 reliée en un point intermédiaire entre la source de pression 4 et l'entrée haute pression 5 du distributeur 1, et, d'autre part, la sortie de retour 9 vers la bâche 7 du distributeur 1.

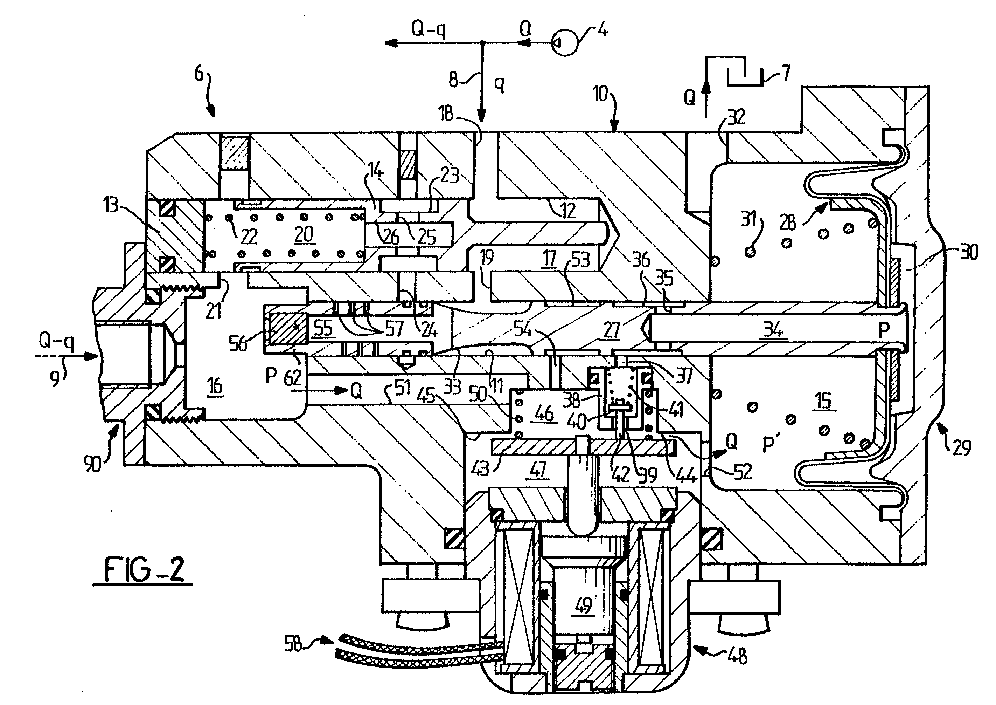

Comme on le voit bien sur la figure 2, le dispositif 6 comporte un corps 10 dans lequel sont formés un premier alésage 11 et un second alésage 12 avantageusement parallèles. Le second alésage 12 est un alésage borgne fermé par un bouchon 13 et dans lequel est monté à coulissement un tiroir régulateur de débit 14 du type centre fermé, tandis que le premier alésage 11 débouche d'un côté dans une chambre de sortie 15 et, de l'autre côté, dans une chambre intermédiaire 16 formées dans le corps. Le tiroir 14 délimite dans le second alésage 12 une chambre d'entrée 17 dans laquelle débouchent un passage d'entrée 18, destiné à être relié à la conduite de dérivation 8, et un passage 19 communiquant avec le premier alésage 11. Le tiroir 14 délimite dans le second alésage 12 une autre chambre 20 fermée par le bouchon 13 et communiquant avec la chambre intermédiaire 16 par un orifice de régulation 21 susceptible d'être sélectivement partiellement occulté (en constituant ainsi une restriction variable) par l'extrémité adjacente du tiroir 14 qui est sollicité dans la direction vers la chambre d'entrée 17 par un ressort 22 prenant appui sur le bouchon 13. Le tiroir 14 comporte une gorge annulaire périphérique 23 communiquant avec un autre passage 24 établissant la communication entre le premier alésage 11 et le second alésage 12, et avec l'autre chambre 20 par un passage radial 25 et un passage interne axial 26.

Dans le premier alésage 11 est monté à coulissement un tiroir pilote ou aiguille 27 dont une extrémité, faisant saillie dans la chambre de sortie 15, est solidaire d'un moyen de piston, typiquement du type à membrane élastique 28 bridée par sa périphérie entre le corps 10 et un couvercle 29 rapporté sur le corps, la membrane 28 séparant ainsi la chambre de sortie 15 d'une chambre pilote 30 délimitée extérieurement par le couvercle 29. La membrane 28 et, partant, le tiroir 27, est sollicité dans la direction vers le couvercle 29 par un ressort 31 disposé dans la chambre de sortie 15 dans laquelle débouche un passage de sortie 32 destiné à être relié à la bâche 7. Le tiroir 27 comporte, entre les passages 19 et 24, une gorge périphérique annulaire profilée en forme de cône 33 communiquant en permanence avec le passage 19 et communiquant sélectivement, selon la position du tiroir 27, avec le passage 24 débouchant dans la gorge annulaire 23 du tiroir 14 en formant avec le passage 24 une restriction variable. L'extrémité du tiroir 27 reliée à la membrane 28 est formée intérieurement avec un alésage axial borgne 34 communiquant en permanence avec la chambre pilote 30 et, par un passage radial 35, avec une gorge annulaire périphérique 36 au niveau de laquelle débouche un passage 37 établissant une communication entre le premier alésage 11 et une chambre interne formée dans un corps de clapet 38 définissant un passage de clapet 39 sélectivement obturable par un élément de clapet 40 sollicité par un ressort 41 dans la direction tendant à obturer le passage 39 et solidaire d'une tige 42 s'étendant au travers du passage 39 et portant en appui, sous l'effet du ressort 41, contre un élément de clapet pilote 43, typiquement en forme de plaque annulaire, définissant un passage de fluide annulaire à section variable 44 avec un épaulement annulaire 45 entre une chambre cylindrique 46, dans laquelle s'étend partielleme nt le corps de clapet 38, et une cavité 47 dans laquelle est montée de façon étanche un actionneur d'électrovalve 48 comportant un plongeur 49 avec lequel coopère en appui, via un axe central, l'élément de clapet pilote 43     sous l'effet d'un ressort 50 disposé dans la chambre cylindrique 46. La chambre cylindrique 46 communique en permanence avec la chambre intermédiaire 16 par un passage 51 formé dans le corps 10, avantageusement parallèlement au premier alésage 11, et la cavité 47 communique en permanence avec la chambre de sortie 15 par un passage 52 formé dans le corps 10. La chambre intermédiaire 16 est délimitée extérieurement par un raccord obturateur 90 pour le raccordement à la sortie de retour 9 du distributeur 1.

Dans le mode de réalisation représenté, le tiroir 27 comporte, entre les gorges 33 et 36, une gorge annulaire périphérique intermédiaire 53 dans laquelle débouche un passage 54 formé entre le premier alésage 11 et la chambre cylindrique 46 afin d'éviter que la haute pression dans la gorge 33 ne puisse passer dans la gorge 36 et, de là, vers la chambre pilote 30. De plus, le tiroir 27 comporte avantageusement, une extrémité 62 opposée à la membrane 28, faisant saillie dans la chambre intermédiaire 16 et comprenant un alésage axial 55, obturé extérieurement par un bouchon 56 et communiquant avec la gorge 33, et avec une série de restrictions radiales 57, axialement espacées les unes des autres, débouchant dans l'alésage 55 de façon à établir sélectivement un débit de fuite entre la gorge 33 et la chambre 16 lorsque la différentielle de pression entre la chambre pilote 30 et la chambre de sortie 15 excède une valeur déterminée. Le bobinage de l'électrovalve 48 est relié par des conducteurs 58 à un boîtier de commande électronique 59 élaborant des signaux de commande de l'électrovalve 48 en fonction de paramètres significatifs du fonctionnement du véhicule, notamment de sa vitesse, fournis par au moins un capteur 60. De préférence, l'électrovalve 48 sera du type à entrefer élevé (par exemple de l'ordre de 3mm), devant lequel les variations du passage 44 sont négligeables (avec une levée de clapet de l'ordre de 0,1mm pour un clapet 43 ayant un diamètre de 20mm, pour constituer ainsi un système à entrefer pratiquement constant.

Le fonctionnement du dispositif selon l'invention est le suivant : selon la position des tiroirs 27 et 14, un débit de dérivation $\underline{q}$ (par exemple jusqu'à 3 litres par minute pour un débit nominal Q de pompe de 5 litres par minute) peut être soustrait au débit $\underline{Q}$ adressé par la source 4 à l'entrée 5 du distributeur 1, via le circuit de dérivation 8 en passant par la chambre d'entrée 17, la gorge 33, le passage 24, la chambre 20 et le passage de régulation 21 pour se recombiner, dans la chambre intermédiaire 16, avec le débit de sortie $\underline{Q}$- $\underline{q}$ provenant du distributeur 1, la totalité du débit $\underline{Q}$ de la source de pression 4 parvenant ainsi, par le passage 51, à la chambre cylindrique 46.

Du fait de cet agencement particulier, une pression P règne dans la chambre intermédiaire 16, dans la chambre cylindrique 46 ainsi que, lorsque le passage 39 est ouvert, dans la chambre pilote 30 alors que, en fonction du passage annulaire 44, il règne dans la cavité 47, ainsi que dans la chambre de sortie 15, une pression réduite P', la différence P - P' ne dépendant que de l'ouverture de l'élément de clapet 43 et donc de l'intensité de commande de l'électrovalve 48, le débit $\underline{Q}$ traversant le passage annulaire 44 étant sensiblement constant. Cette différentielle de pression P - P' détermine, en antagonisme de la force du ressort 31, la position du tiroir 27 et donc la grandeur du débit dérivé $\underline{q}$ dont les petites fluctuations sont régulées par le tiroir 14. En cas de défaut d'alimentation électrique de l'électrovalve 48, l'élément de clapet 43 se déplace, sous l'effet combiné de la différentielle de pression P - P' et du ressort 50, dans la direction tendant à ouvrir le passage annulaire 44, ce qui provoque ainsi la fermeture du passage 39 par le clapet 40 en isolant ainsi la chambre pilote 30 de la chambre cylindrique 46, de sorte que le dispositif reste dans la position qu'il occupait précédemment au moment de la défaillance électrique sans modifier donc brusquement, du fait de cette défaillance, le comportement de l'installation hydraulique. On notera que, en cas de défaillance persistante de la commande électrique de l'électrovalve 48, le dispositif tend à occuper une configuration ne procurant aucune dérivation de débit, en garantissant ainsi le fonctionnement à pleine puissance disponible pour l'installation hydraulique, ce qui convient en particulier pour les opérations de parcage de véhicule, en procurant une perte de charge minimum dans le circuit de retour du distributeur 1 vers la bâche 7.

Quoique la présente invention ait été décrite en relation avec un mode de réalisation particulier, elle ne s'en trouve pas limitée mais est au contraire susceptible de modifications et de variantes qui apparaîtront à l'homme de l'art.

## Revendications

1. Dispositif asservi de contrôle de débit pour installation hydraulique, notamment pour servo-direction de véhicule, comprenant une source de pression (4) ayant une sortie reliée à une entrée (5) d'un distributeur (1) du type à centre ouvert pour la commande d'un moteur hydraulique (3), le distributeur ayant une sortie de retour (9) vers une bâche (7), le dispositif (6) comprenant, dans un corps (10), un ensemble modulateur à tiroir (27) interposé dans un circuit de dérivation (8) entre la sortie de la source de pression et la bâche et piloté hydrauliquement par effet de différentielle de pression (P - P') par un clapet pilote (43) commandé électromagnétiquement (48) et créant la différentielle de pression, caractérisé en ce que le clapet pilote (43) est disposé entre la bâche (7) et un point intermédiaire (16) du circuit de dérivation (8) auquel est reliée la sortie de retour (9) du distributeur (1), le point intermédiaire (16) étant lui-même situé directement en aval de l'ensemble modulateur (27).

2. Dispositif selon la revendication 1, caractérisé en ce que l'ensemble modulateur comprend un tiroir pilote (27) actionnable par la différentielle de pression (P - P') de part et d'autre du clapet pilote (43) et verrouillable en une position précédemment adoptée quelconque par un clapet d'isolement (40) couplé au clapet pilote, en cas de défaillance électrique de la commande électromagnétique (48) de ce dernier.

3. Dispositif selon la revendication 2, caractérisé en ce que le tiroir pilote (27) est monté coulissant dans un premier alésage (11) formé dans le corps (10) et débouchant dans une première chambre (15) formée dans le corps (10) et séparée d'une seconde chambre (30) par une paroi mobile (28) solidaire d'une première extrémité du tiroir pilote (27), la première chambre (15) étant interposée entre le clapet pilote (43) et la bâche (7), la seconde chambre (30) étant reliée audit point intermédiaire (16) du circuit de dérivation (8) via le clapet d'isolement (40).

4. Dispositif selon la revendication 3, caractérisé en ce que l'ensemble modulateur comprend un tiroir régulateur (14) sollicité par un ressort (22), coulissant dans un second alésage (12) du corps (10), divisant ce second alésage en une troisième chambre (17) reliée à la sortie de la source (4) et une quatrième chambre (20), et coopérant avec un premier passage (21) reliant la quatrième chambre (20) à une cinquième chambre (16) dans le corps (10) formant ledit point intermédiaire du circuit de dérivation.

5. Dispositif selon la revendication 4, caractérisé en ce que le tiroir pilote (27) comporte une gorge périphérique profilée (33) communiquant avec la troisième chambre (17) et coopérant sélectivement avec un second orifice (24) reliant les premier (11) et second (12) alésages et communiquant avec une gorge périphérique (23) du tiroir régulateur (14) communiquant en permanence avec la quatrième chambre (20).

6. Dispositif selon la revendication 4 ou la revendication 5, caractérisé en ce que le clapet pilote (43) coopère avec un épaulement annulaire formant siège de clapet (45) entre une sixième (46) et une septième (47) chambres formées dans le corps (10) et communiquant en permanence respectivement avec la cinquième (16) et la première (15) chambres.

7. Dispositif selon la revendication 6, caractérisé en ce que le clapet d'isolement (40) est disposé entre la sixième chambre (46) et un passage (37) débouchant dans le premier alésage (11) et communiquant avec une rainure périphérique (36) du tiroir pilote (27) communiquant elle-même avec la seconde chambre (30) par un passage (35,34) formé dans le tiroir pilote (27).

8. Dispositif selon l'une des revendications 3 à 7, caractérisé en ce que le premier alésage (11) débouche, à l'opposé de la première chambre (15), dans la cinquième chambre (16), le tiroir pilote (27) ayant une seconde extrémité (62), opposée à la paroi mobile (28), s'étendant dans la cinquième chambre (16).

9. Dispositif selon la revendication 5 et la revendication 8, caractérisé en ce que le tiroir pilote (27) comporte, dans sa seconde extrémité (62), un passage interne (55) entre la gorge profilée (33) et une série d'orifices calibrés axialement espacés (57) débouchant radialement dans le premier alésage (11).

10. Dispositif selon l'une des revendications 6 à 9, caractérisé en ce que le clapet pilote (43) est constitué par une plaque circulaire sollicitée en écartement de l'épaulement annulaire (45) par un ressort (50) disposé dans la sixième chambre (46) et associée à un plongeur (49) d'un actionneur électromagnétique (48) monté dans la septième chambre (47).

## Patentansprüche

1. Geregelte Durchfluß-Steuervorrichtung für eine hydraulische Anlage, insbesondere für eine Fahrzeug-Servolenkung, mit einer Druckquelle (4), die einen Ausgang aufweist, welcher mit einem Eingang (5) eines Verteilers (1) vom Typ mit offener Mitte zur Steuerung eines Hydraulikmotors (3) verbunden ist, wobei der Verteiler einen Rücklaufausgang (9) aufweist, der zu einem Vorratsbehälter (7) führt, wobei die Vorrichtung in einem Körper (10) eine Schieber-Modulatoreneinheit (27) umfaßt, die in einen Abzweigungskreis (8) zwischen der Druckquelle und dem Vorratsbehälter eingefügt ist und hydraulisch gesteuert wird durch einen Differenzdruckeffekt (P–P') und mittels einer Steuerklappe (43), welche elektromagnetisch (48) gesteuert wird und die Druckdifferenz erzeugt, dadurch gekennzeichnet, daß die Steuerklappe (43) zwischen dem Vorratsbehälter (7) und einem Zwischenpunkt (16) des Abzweigungskreises (8) angeordnet ist, womit der Rücklaufausgang (9) des Verteilers (1) verbunden ist, wobei der Zwischenpunkt (16) seinerseits direkt strömungsabwärts von der Modulatoreinheit (27) gelegen ist.

2. Vorrichtung nach Anspruch 1, dadurch gekennzeichnet, daß die Modulatoreinheit einen Steuerschieber (27) umfaßt, der durch die Druckdifferenz (P–P') auf den beiden Seiten der Steuerklappe (43) betätigbar ist und im Falle eines elektrischen Versagens der elektromagnetischen Steuerung (48) der Steuerklappe in einer beliebigen Stellung verriegelbar ist, welche zuvor eine an die Steuerklappe angekoppelte Trennklappe (40) eingenommen hatte.

3. Vorrichtung nach Anspruch 2, dadurch gekennzeichnet, daß der Steuerschieber (27) verschiebbar in einer ersten Bohrung (11) angeordnet ist, die in dem Körper (10) gebildet ist und in eine erste Kammer (15) einmündet, welche in dem Körper (10) gebildet ist und von einer zweiten Kammer (30) durch eine bewegliche Wandung (28) getrennt ist, die mit einem ersten Ende des Steuerschiebers (27) fest verbunden ist, wobei die erste Kammer (15) zwischen der Steuerklappe (43) und dem Vorratsbehälter (7) angeordnet ist und die zweite Kammer (30) an den Zwischenpunkt (16) des Abzweigungskreises (8) über die Trennklappe (40) angeschlossen ist.

4. Vorrichtung nach Anspruch 3, dadurch gekennzeichnet, daß die Modulatoreinheit einen Regulierschieber (14) umfaßt, der durch eine Feder (22) beaufschlagt wird und in einer zweiten Bohrung (12) des Körpers (10) gleitverschiebbar ist, um diese zweite Bohrung in eine dritte, mit dem Auslaß der Quelle (4) verbundene Kammer (17) und eine vierte Kammer (20) zu unterteilen, wobei ein Zusammenwirken mit einem ersten Kanal (21) stattfindet, welcher die vierte Kammer (20) mit einer fünften Kammer (16) in dem Körper (10) verbindet, die den Zwischenpunkt des Abzweigungskreises bildet.

5. Vorrichtung nach Anspruch 4, dadurch gekennzeichnet, daß der Steuerschieber (27) eine profilierte umlaufende Nut (33) umfaßt, die mit der dritten Kammer (17) in Verbindung steht und selektiv mit einer zweiten Öffnung (24) zusammenwirkt, welche die erste (11) und die zweite (12) Bohrung miteinander verbindet und mit einer umlaufenden Nut (23) des Regulierschiebers (14) in Verbindung steht, die dauernd mit der vierten Kammer (20) verbunden ist.

6. Vorrichtung nach Anspruch 4 oder Anspruch 5, dadurch gekennzeichnet, daß die Steuerklappe (43) mit einer Ringschulter zusammenwirkt, die den Ventilklappensitz (45) bildet und zwischen einer sechsten (46) und einer siebten (47) Kammer gelegen ist, wobei diese Kammern in dem Körper (10) gebildet sind und die eine von ihnen dauernd mit der fünften (16) und die andere mit der ersten (15) Kammer in Verbindung steht.

7. Vorrichtung nach Anspruch 6, dadurch gekennzeichnet, daß die Trennklappe (40) zwischen der sechsten Kammer (46) und einem Kanal (37) angeordnet ist, welcher in die erste Bohrung (11) einmündet und mit einer umlaufenden Nut (36) des Steuerschiebers (27) in Verbindung steht, welche ihrerseits mit der zweiten Kammer (30) über einen Kanal (35, 34) in Verbindung steht, der in dem Steuerschieber (27) gebildet ist.

8. Vorrichtung nach einem der Ansprüche 3 bis 7, dadurch gekennzeichnet, daß die erste Bohrung (11) gegenüber der ersten Kammer (15) in die fünfte Kammer (16) einmündet, wobei der Steuerschieber (27) ein zweites, der beweglichen Wandung (28) gegenüberliegendes Ende (62) aufweist, das sich in die fünfte Kammer (16) hinein erstreckt.

9. Vorrichtung nach Anspruch 5 und Anspruch 8, dadurch gekennzeichnet, daß der Steuerschieber (27) an seinem zweiten Ende (62) einen internen Kanal (55) zwischen der profilierten Nut (33) und einer Reihe von kalibrierten Öffnungen aufweist, die in Axialrichtung beabstandet (57) liegen und radial in die erste Bohrung (11) einmünden.

10. Vorrichtung nach einem der Ansprüche 6 bis 9, dadurch gekennzeichnet, daß die Steuerklappe (43) durch eine kreisrunde Platte gebildet ist, welche von der Ringschulter (45) durch eine Feder (50) fort beaufschlagt wird, die in der sechsten Kammer (46) angeordnet ist und einem Tauchkolben (49) eines elektromagnetischen Aktuators (48) zugeordnet ist, welcher in der siebten Kammer (47) angeordnet ist.

## Claims

1. Flow-control servo device for a hydraulic system, especially for the power-assisted steering of a vehicle, comprising a pressure source (4) having an outlet connected to an inlet (5) of a distributor (1) of the opencentre type for controlling a hydraulic motor (3), the distributor having a return outlet (9) towards a tank (7), the device (6) comprising, in a body (10), a slide modulator assembly (27) inserted in a branch circuit (8) between the outlet of the pressure source and the tank and controlled hydraulically, as a result of a pressure differential effect (P–P'), by a pilot valve (43) controlled electromagnetically (48) and generating the pressure differential, characterized in that the pilot valve (43) is arranged between the tank (7) and an intermediate point (16) of the branch circuit (8), to which the return outlet (9) of the distributor (1) is connected, the intermediate point (16) itself being located directly downstream of the modulator assembly (27).

2. Device according to Claim 1, characterized in that the modulator assembly comprises a pilot slide (27) actuable by means of the pressure differential (P–P') on either side of the pilot valve (43) and lockable in any previously assumed position by means of an isolating valve (40) coupled to the pilot valve, in the event of the electrical failure of the electromagnetic control (48) of the latter.

3. Device according to Claim 2, characterized in that the pilot slide (27) is mounted slidably in a first bore (11) made in the body (10) and opening into a first chamber (15) formed in the body (10) and separated from a second chamber (30) by a movable wall (28) integral with a first end of the pilot slide (27), the first chamber (15) being interposed between the pilot valve (43) and the tank (7), and the second chamber (30) being connected to the said intermediate point (16) of the branch circuit (8) via the isolating valve (40).

4. Device according to Claim 3, characterized in that the modulator assembly comprises a regulating slide (14) which is stressed by a spring (22), slides in a second bore (12) of the body (10), divides this second bore into a third chamber (17) connected to the outlet of the source (4) and a fourth chamber (20), and interacts with a first passage (21) connecting the fourth chamber (20) to a fifth chamber (16) in the body (10) forming the said intermediate point of the branch circuit.

5. Device according to Claim 4, characterized in that the pilot slide (27) has a profiled peripheral groove (33) which communicates with the third chamber (17) and interacts selectively with a second orifice (24) connecting the first bore (11) and second bore (12) and communicating with a peripheral groove (23) of the regulating slide (14) communicating permanently with the fourth chamber (20).

6. Device according to Claim 4 or Claim 5, characterized in that the pilot valve (43) interacts with an annular shoulder forming a valve seat (45) between a sixth chamber (46) and a seventh chamber (47) which are formed in the body (10) and which communicate permanently with the fifth chamber (16) and the first chamber (15) respectively.

7. Device according to Claim 6, characterized in that the isolating valve (40) is arranged between the sixth chamber (46) and a passage (37) opening into the first bore (11) and communicating with a peripheral groove (36) of the pilot slide (27), itself communicating with the second chamber (30) via a passage (35, 34) made in the pilot slide (27).

8. Device according to one of Claims 3 to 7, characterized in that the first bore (11) opens, opposite the first chamber (15), into the fifth chamber (16), the pilot slide (27) having a second end (62) opposite the movable wall (28) and extending into the fifth chamber (16).

9. Device according to Claim 5 and Claim 8, characterized in that the pilot slide (27) has, in its second end (62), an inner passage (55) between the profiled groove (33) and a series of calibrated orifices (57) arranged at an axial distance from one another and opening radially into the first bore (11).

10. Device according to one of Claims 6 to 9, characterized in that the pilot valve (43) consists of a circular plate which is stressed away from the annular shoulder (45) by a spring (50) arranged in the sixth chamber (46) and which is associated with a plunger (49) of an electromagnetic actuator (48) mounted in the seventh chamber (47).

FIG - 1

FIG-2